(19) Europäisches Patentamt / European Patent Office / Office européen des brevets

(11) **EP 3 613 592 A1**

(12) **EUROPÄISCHE PATENTANMELDUNG**

(43) Veröffentlichungstag:
26.02.2020  Patentblatt 2020/09

(21) Anmeldenummer: 19191183.3

(22) Anmeldetag: 12.08.2019

(51) Int Cl.:
**B32B 27/08** (2006.01)       **B32B 27/20** (2006.01)
**B32B 27/36** (2006.01)       **B32B 37/00** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **22.08.2018  DE 102018214185**

(71) Anmelder: **Mitsubishi Polyester Film GmbH**
**65203 Wiesbaden (DE)**

(72) Erfinder:
• **Konrad, Matthias**
**65830 Kriftel (DE)**
• **Altenhofen, Deborah**
**55118 Mainz (DE)**
• **Lohre, Claudia**
**65195 Wiesbaden (DE)**

(74) Vertreter: **Schweitzer, Klaus**
**Plate Schweitzer Zounek**
**Patentanwälte**
**Rheingaustrasse 196**
**65203 Wiesbaden (DE)**

(54)   **POLYESTERFOLIE MIT BESCHICHTUNG**

(57)   Die Erfindung betrifft eine transparente, ein- oder mehrschichtige, biaxial orientierte Polyesterfolie, die auf mindestens einer Folienoberfläche eine Barriere-Beschichtung aufweist,
wobei
(a) die biaxial orientierte Polyesterfolie (exklusive Beschichtung) eine Dicke von 8 $\mu$m - 100 $\mu$m aufweist,
(b) die Barriere-Beschichtung das Trocknungsprodukt einer wässrigen Beschichtungsdispersion oder wässrigen Beschichtungslösung darstellt, die
(c) mindestens ein Polyanion und mindestens ein Polyethylenimin enthält, wobei
(d) das Polyanion neutralisierte Säuregruppen umfasst, die durch Carboxylat-, Phosphat- und/oder Sulfatgruppen dargestellt werden und
(e) die Trockendicke der Beschichtung $d$ im Bereich: 15 nm $\leq d <$ 200 nm liegt, wobei die biaxial orientierte, beschichtete Polyesterfolie
(f) eine Transparenz von $\geq$ 88 % und
(g) eine Sauerstoffpermeation aufweist, die mindestens um einen Faktor zwei niedriger ist, als die der unbeschichteten biaxial orientierten Folie.

Die Erfindung betrifft weiterhin ein Verfahren zur Herstellung der Folie sowie ihre Verwendung als Sauerstoff-Barrierefolie z.B. für die Verpackung von Lebensmitteln in Monokomponentenverpackungen oder in Laminaten z.B. mit Polyolefinfolien.

EP 3 613 592 A1

**Beschreibung**

**Gebiet der Erfindung**

Die Erfindung betrifft eine beschichtete biaxial orientierte Polyesterfolie, die eine reduzierte Durchlässigkeit gegenüber Sauerstoff aufweist. Die Erfindung betrifft weiterhin ein Verfahren zur Herstellung der Folie und ihre Verwendung.

**Hintergrund**

Polyesterfolien haben aufgrund ihrer hervorragenden optischen und mechanischen Eigenschaften vielseitige Anwendungsgebiete. Ein Anwendungsgebiet ist die Verpackung von Lebensmitteln. Eine wichtige Eigenschaft hierbei ist der Schutz des Lebensmittels vor Sauerstoff.

**Stand der Technik**

Polyesterfolien mit verschiedenen transparenten Barrierebeschichtungen sind bekannt. Weit verbreitet sind Folien mit PVDC (Polyvinylidenchlorid)-Beschichtung. Die Sauerstoffdurchlässigkeit dieser Folien liegt bei ca. 10 $cm^3$/($m^2 \cdot d$). Nachteile sind, dass die Beschichtung Chlor enthält und dass die Beschichtung in einem separaten Schritt (offline) aufgebracht werden muss.

Andere übliche Barriereschichten sind Schichten aus Aluminiumoxid ($AlO_x$) oder Siliziumoxid ($SiO_x$). Auch hier wird die Schicht in einem relativ teuren Offline-Verfahren appliziert. Zudem sind die Schichten empfindlich gegenüber mechanischer Belastung.

In der WO 2013/182444 wird die Verwendung einer wässrigen Lösung als Barrierebeschichtung für Folie beschrieben. Die Lösung enthält ein Polyanion und Polyethylenimin. Im Beispiel wird die Barriere einer 40 $\mu$m dicken PP-Folie mit einer Beschichtung von 4 $\mu$m von 975 auf 32 $cm^3$/($m^2 \cdot d$) reduziert. Solche Schichtdicken lassen sich bei Verwendung von wässrigen Lösungen nicht bei der Herstellung von PET-Folie inline aufbringen, da bei üblichen Produktionsgeschwindigkeiten die Trockenkapazität nicht ausreichend ist. Weiterhin hätte die Menge an Beschichtung Nachteile bei der Regenerierung (Rückführung von Produktionsresten) der Folie. Die Verwendung von regeneriertem Beschichtungsmaterial führt zu optischen Beeinträchtigungen der Folie.

**Aufgabe**

Die Folien gemäß dem Stand der Technik sind nachteilig, weil die Barrierebeschichtung in allen Fällen in einem zusätzlichen Prozessschritt auf die Folien aufgebracht wird. Die oft genutzte PVDC-Beschichtung enthält Chlor und ist damit nicht umweltfreundlich. Aufgedampfte Oxidschichten werden aufgrund ihrer Sprödigkeit in der weiteren Verarbeitung zu Verpackungen leicht beschädigt.

Aufgabe der vorliegenden Erfindung war es eine beschichtete, transparente Polyesterfolie zur Verfügung zu stellen, die eine reduzierte Durchlässigkeit gegenüber Sauerstoff aufweist, welche um mindestens den Faktor zwei niedriger ist, als die der unbeschichteten Folie, und die in einem Prozessschritt kostengünstig hergestellt werden kann. Die optischen Eigenschaften der Folie sollen sich nicht wesentlich von denen einer unbeschichteten Polyesterfolie unterscheiden.

**Lösung der Aufgabe**

Die Aufgabe wird durch die Bereitstellung einer transparenten ein- oder mehrschichtigen biaxial orientierten, Inline-beschichteten Polyesterfolie gelöst, wobei die Polyesterfolie auf mindestens einer Folienoberfläche eine Barriere-Beschichtung aufweist, und dadurch gekennzeichnet ist, dass

(a) die biaxial orientierte Polyesterfolie (exklusive Beschichtung) eine Dicke von 8 $\mu$m - 100 $\mu$m aufweist,

(b) die Inline-aufgebrachte Barriere-Beschichtung das Trocknungsprodukt einer wässrigen Dispersion oder wässrigen Lösung darstellt, wobei

(c) die Beschichtung, mindestens ein Polyanion und mindestens ein Polyethylenimin enthält, wobei

(d) das Polyanion neutralisierte Säuregruppen umfasst, die durch Carboxylat-, Phosphat- und/oder Sulfatgruppen dargestellt werden und

(e) die Trockendicke der Beschichtung d im Bereich: 15 nm $\leq d <$ 200 nm liegt,
wobei die biaxial orientierte Inline-beschichtete Polyesterfolie

(f) eine Transparenz von $\geq$ 88 % und

(g) eine Sauerstoffpermeation aufweist, die mindestens um einen Faktor zwei niedriger ist, als die der unbeschichteten biaxial orientierten Folie.

**Detailbeschreibung**

Die erfindungsgemäße Polyesterfolie besteht aus Polyester, Additiven und einer Beschichtung.

Die Basisschicht enthält bevorzugt mindestens 90 Gew.-% thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroxymethyl-cyclohexan und Terephthalsäure [= Poly(1,4-cyclohexan-dimethylenterephthalat), PCDT] sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. In einer besonders bevorzugten Ausführungsform besteht die Schicht aus Polyethylenterephthalat-Homopolymer.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Geeignete andere aromatische Dicarbonsäuren sind bevorzugt Benzoldicarbonsäuren, Naphthalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19) Alkandisäuren besonders geeignet, wobei der Alkanteil geradkettig oder verzweigt sein kann. Von heterocyclischen Dicarbonsäuren ist insbesondere 2,5-Furandicarbonsäure zu nennen.

Die gegebenenfalls vorhandene(n) zusätzlichen Schichten (Zwischen- oder Deckschichten) der Folie bestehen bevorzugt ebenfalls aus einem Polyester, wie er oben beschrieben wurde, wobei die Zusammensetzung gleich oder verschieden ist von der oben beschriebenen Basisschicht.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die Folie gemäß der Erfindung enthält Partikel um eine gewisse Rauheit der Oberfläche zu erreichen und die Folie gut wickeln zu können.

Verwendbare Partikel sind beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Titandioxid, Kaolin oder partikelförmige Polymere wie z. B. vernetzte Polystyrol- oder Arcrylat-Partikel. Bevorzugt wird amorphe Kieselsäure als Partikel verwendet. Die Partikel werden bevorzugt in einer Konzentration von kleiner 0,5 Gew.-% bezogen auf das Gesamtgewicht der Folie eingesetzt. Weitere Partikel, die die Oberflächen- und rheologischen Eigenschaften der Folie beeinflussen sind in der erfindungsgemäßen Folie bevorzugt nicht vorhanden.

Ist die Folie mehrschichtig aufgebaut, können die Partikel in allen Schichten, bevorzugt in den Deckschichten enthalten sein.

Die Folie kann neben den Partikeln noch zusätzlich übliche Additive, wie beispielsweise Stabilisatoren enthalten. Als Stabilisatoren können beispielsweise Phosphorverbindungen, wie Phosphorsäure oder Phosphorsäureester, eingesetzt werden.

Die Gesamtdicke der erfindungsgemäßen Polyesterfolie kann innerhalb bestimmter Grenzen variieren. Sie beträgt 8 bis 100 $\mu$m, vorzugsweise 10 bis 50 $\mu$m, besonders bevorzugt 12 bis 30 $\mu$m, wobei die Schicht B (=Basisschicht) der mehrschichtigen Variante einen Anteil von vorzugsweise 60 bis 90 % an der Gesamtdicke hat. Der Anteil der Basisschicht der dreischichtigen Ausführungsform an der Gesamtfoliendicke beträgt bevorzugt mindestens 60%, besonders bevorzugt mindestens 70% und ganz besonders bevorzugt mindestens 75%.

In einer Ausführungsform ist die Folie dreischichtig aufgebaut und weist auf der einen Seite der Schicht (B) (=Basisschicht) eine Deckschicht (A) und auf der anderen Seite der Schicht (B) eine weitere Deckschicht (C) auf. In diesem Fall bilden die beiden Schichten (A) und (C) die Deckschichten (A) und (C). Die Barriere-Beschichtung kann dabei auf die Deckschicht (A) und/oder Deckschicht (C) aufgebracht werden. Durch einen dreischichtigen Aufbau kann eine Folie mit einer geringen Trübung und guter Transparenz erhalten werden, in dem die Schicht (B) keine weiteren Partikel außer denen, die durch Zugabe des Eigenregrats eingebracht werden, enthält. Auf diese Weise kann der Anteil an rückgeführtem Regenerat erhöht werden, was zu einer besonders wirtschaftlichen Folienproduktion führt. Als Eigenregenerat werden Folienreste/-abfälle bezeichnet, die während des Folienherstellungsprozesses anfallen (z.B. Saumstreifen), diese können entweder während der Produktion direkt zurückgeführt werden oder zunächst gesammelt und anschließend bei der Herstellung der Schicht (B) zugesetzt werden.

Dabei soll der Anteil des zurückgeführten, recycelten Polyestermaterials so groß wie möglich sein, ohne die beschriebenen, erfindungsgemäßen Folieneigenschaften zu beeinträchtigen. In der erfindungsgemäßen Folie kann der Anteil an recyceltem Polyestermaterial in der Basisschicht (B) 0-60 Gew.%, bevorzugt 0-50 Gew.% und besonders bevorzugt 0-40 Gew.% bezogen auf das Gesamtgewicht der Folie betragen.

In einer Ausführungsform (I) ist die Polyesterfolie dreischichtig und weist eine ABC-Struktur auf. Dabei ist die der Barriere-Beschichtung (auf der Deckschicht (A)) gegenüberliegende Polyesterdeckschicht (C-Schicht) eine Siegelschicht. Die Siegelschicht ist amorph und besteht zu mindestens 90 Gew.-% aus einem thermoplastischen Polyester, wobei dieser einen Copolyester darstellt, der aus Ethylenglykol- sowie Terephthal- und Isophthalsäure-abgeleitete Monomereinheiten aufgebaut ist, wobei der Anteil der aus Isophthalsäure-abgeleiteten Einheiten 10-30 Mol-% bzgl. der aus Dicarbonsäure-abgeleiteten Einheiten beträgt. Die Siegelschicht ermöglicht die direkte Verwendung (ohne das Aufbringen eines Siegellacks) der Folie als Siegelfolie (Deckel-Folie) für Verpackungen, die z.B. eine APET- oder CPET-Schale (Tray) umfassen.

Die Siegelschicht kann, wie die restlichen Schichten der Polyesterfolie, die oben genannten Partikel in Mengen von kleiner 0,2 Gew.-% enthalten.

## Beschichtung

Die Beschichtungslösung ist eine wässrige Lösung enthaltend ein Polyanion und wenigstens ein Polyethylenimin. Das Polyanion, auch anionisches Polymer genannt, ist ein Polymer, das Säuregruppen enthält, die mit einer oder mehrerer Basen aus der Gruppe der anorganischen und monovalenten organischen Basen neutralisiert wurde. Dieses Polymer hat vor der Neutralisation ein mittleres Molekulargewicht von mindestens 10000 g/mol. Das Polyethylenimin hat ein mittleres Molekulargewicht von mindestens 25000 g/mol.

Solche Beschichtungen sind in WO 2013/182444 beschrieben.

Typische in WO 2013/182444 beschriebene off-line aufgebrachte Beschichtungsdicken sind 0,2 $\mu$m bis 50 $\mu$m. Überraschenderweise wird, wenn die Beschichtung inline aufgebracht wird, bereits mit einer Trocken-Beschichtungsdicke von < 200 nm eine große Verringerung der Durchlässigkeit der biaxial orientierten Polyesterfolie gegenüber Sauerstoff erreicht. Vermutlich wird dies durch die Querstreckung der beschichteten Folie und die hohen Temperaturen am Ende des Herstellprozesses erreicht. Die erfindungsgemäßen Folien mit niedriger Trocken-Schichtdicke der Beschichtung zeigen überraschenderweise eine geringere Sauerstoffdurchlässigkeit als Folien, die in einem separaten Schritt, also off-line, mit der gleichen Schichtdicke beschichtet sind.

Die wässrige Beschichtungslösung enthält 3-30 Gew.-% Feststoff, wobei das Gewichtsverhältnis des Polyanions (vor der Neutralisation) zum Polyethylenimin bevorzugt 90:10 bis 50:50, besonders bevorzugt 80:20 bis 65:45 beträgt.

Die Dicke der getrockneten Beschichtung d liegt im Bereich von 15 nm $\leq$ d < 200 nm, bevorzugt 20 nm $\leq d \leq$ 180 nm, besonders bevorzugt 25 nm $\leq$ d $\leq$ 150 nm. Ist die Beschichtungsdicke $d$ < 15 nm wird keine ausreichende Verringerung der Sauerstoffdurchlässigkeit der Folie mehr erreicht. Ist die Beschichtungsdicke $d \geq$ 200 nm werden die Folieneigenschaften beim Einsatz von Regenerat negativ beeinflusst. Außerdem sinkt die Wirtschaftlichkeit der Folie.

Durch den Einsatz der Beschichtung mit der erfindungsgemäßen Zusammensetzung in den erfindungsgemäßen Dicken wird eine Sauerstoffpermeation der beschichteten biaxial orientierten Polyesterfolie erreicht, die um mindestens einen Faktor von zwei (50 %) niedriger ist, als die der unbeschichteten, biaxial orientierten Polyesterfolie. Die Sauerstoffdurchlässigkeit der beschichteten, biaxial orientierten Polyesterfolie beträgt höchstens 50 %, bevorzugt höchstens 30 % und besonders bevorzugt höchstens 20 % der Sauerstoffdurchlässigkeit einer entsprechenden, nicht beschichteten, biaxial orientierten Polyesterfolie.

In einer Ausführungsform enthält die Beschichtungslösung (bzw. Beschichtungsdispersion) zusätzlich zum Polyanion und dem Polyethylenimin einen Vernetzer zu 5-20 Gew.-% bezogen auf den Gesamtfeststoffgehalt der Beschichtungslösung (bzw. Beschichtungsdispersion). Dieser ist bevorzugt ein Oxazolin-modifiziertes Polymer (Oxazolin basierter Vernetzer), das z.B. unter dem Handelsnamen EPOCROS WS-500 und insbesondere EPOCROS WS-700 von Nippon Shokubai erhältlich ist. Durch die Verwendung des Vernetzers in den genannten Mengen wird die Abriebfestigkeit der Beschichtung verbessert, ohne einen negativen Einfluss auf die Barrierewirkung (Erhöhung der Sauerstoffpermeation) der Beschichtung zu haben. Wird der Vernetzer zu mehr als 20 Gew.-% der Beschichtungslösung zugesetzt, hat dies eine Erhöhung der Sauerstoffdurchlässigkeit zur Folge.

In einer Ausführungsform trägt die Folie auch auf der Seite, die der Barriereschicht gegenüberliegt, eine Beschichtung aus einer Polymer-Dispersion, die als Haftvermittler für Druckfarben oder Klebstoffe dient. Geeignete Polymere dieser Art sind z. B. Acrylate wie sie beispielsweise beschrieben sind in der WO 94/13476, Polyurethane, Methacrylsäure oder deren Ester.

In einer weiteren Ausführungsform wird auf die C-Schicht (Siegelschicht) von Ausführungsform (I) eine sogenannte Antifog-Beschichtung (Anti-Beschlag) in einer Dicke von 15-60 nm aufgebracht. Die Antifog-Beschichtung stellt das Trocknungsprodukt einer hydrophilen Beschichtungszusammensetzung dar, die entweder Wasser, Polyvinylpyrrolidon, ein haftvermittelndes Polymeres, das Polyvinylpyrrolidon an Polymeroberflächen bindet, und ein Tensid enthält, wobei das haftvermittelnde Polymer ein Acrylat, hydrophiler Polyester, Polyurethan, Butadiencopolymer mit Acrylnitril oder Methylmethacrylat, Methacrylsäure oder deren Ester ist, oder die Wasser, einen Sulfopolyester und ein Tensid enthält. Das Tensid kann anionisch (z.B. Natriumdodecylsulfat, Natrium und/oder Kaliumsalze von C10-C20-Fettsäuren), kationisch (z.B. N-Cetyl-N,N,N-trimethylammonium Halogenide) und/oder nichtionisch (z.B. C2-C25-Alkylethoxylate mit 2-50 Ethylenoxid-Wiederholungseinheiten). Das Tensid kann auch ein Schutzkolloid wie Polyvinylalkohole, Polyethylenglycol, und/oder ein statistisches oder Blockcopolymer Propylenoxid-Ethylenoxid, wobei $M_W$ der Schutzkolloide zwischen 200 - 10000 g/mol betragen sollte. Das Tensid ist bevorzugt anionisch, ausgewählt aus der Gruppe, bestehend aus Alkylsulfaten, Alkylbenzolsulfaten, Alkylethersulfaten oder Sulfobernsteinsäureestern. Wird ein Sulfopolyester eingesetzt, so ist dieser besonders bevorzugt ein Kondensationsprodukt aus folgenden Monomeren oder deren zur Bildung von Polyestern befähigten Derivaten:

(A) bis zu 95 Mol.-% Isophthalsäure,

(B) 5 bis 20 Mol-% wenigstens eines Sulfomonomeren enthaltend eine Alkalimetallsulfonatgruppe an dem aromatischen Teil einer aromatischen Dicarbonsäure und

(C) die zur Bildung von 100 Mol-% Kondensat notwendige stöchiometrische Menge wenigstens eines copolymerisierbaren aliphatischen oder cycloaliphatischen Glykols mit 2 bis 11 Kohlenstoffatomen.

Geeignete Antifog-Beschichtungen werden in EP 1647568 B1 und EP 1777251 B1 beschrieben. Die Antifog-Beschichtung ermöglicht es, Verpackungen herzustellen, bei denen selbst bei Bildung von Wasserkondensat (innerhalb der Verpackung) das Produkt gut erkennbar bleibt. Wird die Antifog-Beschichtung in einer Dicke von < 15 nm aufgetragen, so sind die notwendigen Antifog-Eigenschaften nicht ausreichend um die Bildung von Wassertröpfchen hinreichend zu vermeiden. Wird die Antifog-Beschichtung in einer Dicke von > 60 nm aufgetragen, so hat dies zum einen eine Reduzierung der Transparenz/Erhöhung der Trübung der Folie zur Folge und zum anderen einen negativen Effekt auf die Siegeleigenschaften der Siegelschicht.

Um die erfindungsgemäße Polyesterfolie in Verpackungen zu verwenden, die dafür vorgesehen sind mit Lebensmitteln in Berührung zu kommen, hat es sich als günstig erweisen, wenn die Beschichtungsdispersion der Barrierebeschichtung und alle ggf. zugesetzten weiteren Komponenten (z.B. Vernetzer) in der Verordnung EU/10/2011 (Anhang I, Tabelle 1) aufgeführt sind. Dabei sollte die Beschichtung nach der Trocknung (und Thermofixierung) die in EU/10/2011 angeführten Migrationsgrenzen einhalten. Falls Stoffe und/oder Lösemittel enthalten sind, die nicht in EU/10/2011 (Anhang I, Tabelle 1) aufgeführt sind oder sehr kleine Migrationsgrenzen aufweisen, so hat es sich als günstig erweisen, diese Stoffe so einzusetzen, dass sie bei der Thermofixierung entweder abdampfen, zersetzen oder chemisch reagieren (z.B. vernetzen oder kovalent mit der Polyesteroberfläche und/oder dem Polymer der Beschichtung verbinden), so dass eine Migration (an die beschichteten Oberfläche) nicht messbar ist, bzw. unterhalb der Nachweisgrenze der entsprechenden Messmethode liegt (für nicht in EU/10/2011 angeführte Stoffe, die keine CMR-Stoffe darstellen, liegt der migrationsgrenzwert bei 10 ppb).

Für die Präsentation des verpackten Produktes ist es wichtig, dass die biaxial orientierte Polyesterfolie mit Barriere-Beschichtung hervorragende optische Eigenschaften aufweist. Die erfindungsgemäße Folie besitzt solche hervorragenden optischen Eigenschaften. Dabei beträgt die Transparenz der Folie mindestens mehr als 88 %, bevorzugt mehr als 90 % und besonders bevorzugt mehr als 92 %. Weiterhin weist die Folie einen Glanz bei 20° von mehr als 120, bevorzugt mehr als 130 und besonders bevorzugt mehr als 140 auf. Darüber hinaus zeigt die Folie eine Trübung von weniger als 5 %, bevorzugt weniger als 4,5 % und besonders bevorzugt weniger als 4 %. Die optischen Eigenschaften können durch die Wahl und den Einsatz der erfindungsgemäßen Folien- und Beschichtungszusammensetzung erreicht werden. Dabei ist im Besonderen die Einhaltung der erfindungsgemäßen Beschichtungsdicke zu beachten.

Die erfindungsgemäßen Eigenschaften der Polyesterfolie werden in Tabelle 1 zusammengefasst:

**Tabelle 1**

| Folieneigenschaften | bevorzugter Bereich | Besonders bevorzugt | Ganz besonders bevorzugt | Einheit | Messmethode |
|---|---|---|---|---|---|
| Trockendicke der Beschichtung $d$ | $15 \leq d < 200$ | $20 \leq d \leq 180$ | $25 \leq d \leq 150$ | nm | Ellipsometer |
| Transparenz | > 88 | > 90 | > 92 | % | ASTM-D 1003-61 |
| Trübung | < 5 | < 4,5 | < 4 | % | ASTM D 1003-61 |
| Glanz (20°) | > 120 | > 130 | > 140 | | DIN 67530 |
| Permeation von Sauerstoff (23 °C, 50 % rF) im Vgl. zur unbeschichteten Folie gleicher Dicke | $\leq 50$ % | $\leq 30$ % | $\leq 20$ % | $cm^3/m^2$ d bar | DIN 53380, Teil 3 |

Aufgrund ihrer Eigenschaften eignen sich die erfindungsgemäßen Folien für den Einsatz als transparente Folien, insbesondere als Sauerstoff-Barrierefolien, für die Verpackung von Lebensmitteln. Die beschriebenen Folien können dabei entweder direkt (alleine), z.B. in Monokomponentenverpackungen (Tray und Deckelfolie bestehen aus Polyester), oder beispielsweise in Laminaten mit Polyolefinfolien verwendet/eingesetzt werden.

**Verfahren zur Herstellung**

Das Herstellungsverfahren für Polyesterfolien wird z. B. beschrieben im "Handbook of Thermoplastic Polyesters, Ed. S. Fakirov, Wiley-VCH, 2002" oder im Kapitel "Polyesters, Films" in der "Encyclopedia of Polymer Science and Engineering, Vol. 12, John Wiley & Sons, 1988". Das bevorzugte Verfahren zur Herstellung der Folie enthält folgende Schritte. Die Rohstoffe werden in je einem Extruder pro Schicht aufgeschmolzen und durch eine ein- oder mehrschichtige Breitschlitzdüse auf eine gekühlte Abzugswalze extrudiert. Diese Folie wird anschließend erneut erhitzt und in Längs(MD o. Maschinenrichtung)- und Querrichtung(TD o. Querrichtung) bzw. in Quer- und Längsrichtung verstreckt ("orientiert"). Die Folientemperaturen im Streckprozess liegen im allgemeinen 10 bis 60 °C über der Glasübergangstemperatur Tg des verwendeten Polyesters, das Streckverhältnis der Längsstreckung liegt üblicherweise bei 2,5 bis 5,0, insbesondere bei 3,0 bis 4,5, das der Querstreckung bei 3,0 bis 5,0, insbesondere bei 3,5 bis 4,5. Die Längsstreckung kann auch gleichzeitig mit der Querstreckung (Simultanstreckung) oder in jeder denkbaren Sequenzfolge durchgeführt werden. Es folgt die Thermofixierung der Folie bei Ofentemperaturen von 180 bis 240 °C, insbesondere von 210 bis 230 °C. Anschließend wird die Folie abgekühlt und aufgewickelt.

Die erfindungsgemäße biaxial orientierte Polyesterfolie wird In-Line beschichtet, d.h. die Beschichtung wird während des Folienherstellprozesses vor der Längs- und/oder Querstreckung aufgebracht. Um eine gute Benetzung der Polyesterfolie mit der wässrigen Beschichtungszusammensetzung zu erreichen, wird die Oberfläche bevorzugt zunächst coronabehandelt. Die Beschichtung kann mit einem gängigen geeigneten Verfahren wie mit einem Schlitzgießer oder einem Sprühverfahren aufgetragen werden. Besonders bevorzugt ist die Aufbringung der Beschichtung mittels des "Reverse gravure-roll coating" Verfahrens, bei dem sich die Beschichtung äußerst homogen mit Antragsgewichten (nass) zwischen 1,0 und 3,0 g/m² auftragen lässt. Ebenfalls bevorzugt ist die Auftragung durch das Meyer-Rod-Verfahren, mit dem sich größere Beschichtungsstärken erzielen lassen. Die Beschichtung auf der fertigen Folie weist bevorzugt eine Dicke von 15 bis < 200 nm, bevorzugt 20 bis 180, besonders bevorzugt 25 bis 150 nm auf.

Die erfindungsgemäße Folie zeichnet sich durch eine niedrige Durchlässigkeit gegenüber Sauerstoff aus, die bei höchstens 50 % der der unbeschichteten Folie liegt. Die Beschichtung hat keinen negativen Einfluss auf die optischen Eigenschaften der Folie. Die Transparenz und der Glanz sind vergleichbar mit der unbeschichteten Folie.

**Methoden**

Zur Charakterisierung der Rohstoffe und der Folien wurden im Rahmen der vorliegenden Erfindung die folgenden Messmethoden benutzt:

**SV-Wert (Standard viscosity)**

Die Standardviskosität in verdünnter Lösung SV wurde, angelehnt an DIN 53 728 Teil 3, in einem Ubbelohde Viskosimeter bei (25 ± 0,05)°C gemessen. Dichloressigsäure (DCE) wurde als Lösemittel verwendet. Die Konzentration des gelösten Polymers betrug 1 g Polymer /100 mL reines Lösemittels. Die Auflösung des Polymers erfolgte 1 Stunde bei 60 °C. Wurden die Proben nach dieser Zeit nicht vollständig gelöst, wurden noch bis zwei Auflösungsversuche jeweils 40 Min bei 80 °C durchgeführt und die Lösungen anschließend 1 Stunde bei einer Drehzahl von 4100 min$^{-1}$ zentrifugiert.

Aus der relativen Viskosität ($\eta_{rel} = \eta/\eta_s$) wird der dimensionslose SV-Wert wie folgt ermittelt:

$$SV = (\eta_{rel} - 1) \times 1000$$

Der Anteil an Partikeln in der Folie bzw. Polymerrohstoff wurde mittels Aschebestimmung ermittelt und durch entsprechende Mehreinwaage korrigiert. D.h.:

$$Einwaage = \frac{(Einwaage\ entsprechend\ 100\ \%\ Polymer)}{[(100 - Partikelgehalt\ in\ Gew.-\%) \cdot 0.01]}$$

**Glanz**

Der Glanz wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den fotoelektronischen Empfänger auffallenden Lichtstrahlen werden als proportionale elektrische Größe angezeigt. Der Messwert ist dimensionslos und muss mit dem Einstrahlwinkel angegeben werden.

**Sauerstoffdurchlässigkeit (OTR = Oxygen Transmission Rate)**

Die Messung der Sauerstoffbarriere erfolgte mit einem OXTRAN® 100 von Mocon Modern Controls (USA) entsprechend DIN 53 380, Teil 3 (23 °C, 50 % relative Luftfeuchtigkeit auf beiden Seiten der Folie). Die Messung der OTR erfolgte dabei jeweils an einer 12 $\mu$m dicken Folie.

**Trübung, Transparenz**

Die Prüfung dient zur Bestimmung der Trübung und Transparenz von Kunststoff-Folien, bei denen die optische Klarheit bzw. Trübung für den Gebrauchswert wesentlich ist. Die Messung erfolgt an dem Hazegard Hazemeter XL-21 1 der Fa. BYK Gardner nach ASTM D 1003-61.

**Siegelnahtfestigkeit gegenüber sich selbst (= FIN-Siegelung)**

Zur Bestimmung der Siegelnahtfestigkeit werden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wird nach der T-Peel-Methode bestimmt = 2 · 90°.

Im Folgenden wird die Erfindung anhand von Beispielen näher erläutert.

**Beispiel 1**

Deckschichten (A):

| | |
|---|---|
| 92 Gew.-% | Polyethylentererphthalatrohstoff aus Ethylenglykol und Terephthalsäure mit einem SV Wert von 825 und einem DEG-Gehalt von 0,9 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat. |

(fortgesetzt)

| 8 Gew.-% | Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,5 Gew.% Siliziumdioxid-Partikel Sylobloc 46 mit einem d50 von 2,5 μm. Hergestellt mittels PTA Verfahren. Katalysator Kaliumtitanyloxalat mit 18 ppm Titan. Umesterungskatalysator Zinkacetat. |

**Basisschicht (B):**

| 100 Gew.-% | Polyethylentererphthalatrohstoff aus Ethylenglykol und Terephthalsäure mit einem SV Wert von 825 und einem DEG-Gehalt von 0,9 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat. |

Beschichtung auf einer Deckschicht (A):

Die Beschichtung wurde aus einer wässrigen Lösung von Polyethylenimin (Mw = 750000 g/mol, pH = 11, Ladungsdichte 17 meq/g) und einer Lösung eines Copolymeren aus Acrylsäure und Maleinsäure (3:1, Mw = 80000 g/mol), das mit Ammoniak neutralisiert wurde, hergestellt. Der Anteil des Polyethylenimins in der Beschichtung betrug 7 Gew.-%, der des Copolymeren 5 Gew.-%.

Die o. g. Rohstoffe wurden in je einem Extruder pro Schicht aufgeschmolzen und durch eine dreischichtige Breitschlitzdüse (ABA-Schichtfolge) auf eine gekühlte Abzugswalze extrudiert. Die so erhaltene amorphe Vorfolie wurde dann zunächst längsgestreckt. Die längsgestreckte Folie wurde in einem Coronaentladegerät coronabehandelt und danach durch Reversgravurbeschichtung mit der oben beschriebenen Lösung beschichtet. Verwendet wurde eine Gravurwalze mit einem Volumen von 6,6 cm³/m². Das Nassantragsgewicht betrug 2,7 g/m². Danach wurde die Folie wurde bei einer Temperatur von 100 °C getrocknet und anschließend quergestreckt, fixiert und aufgerollt (Enddicke der Folie 12,0 μm, Deckschichten (A) je 1,1 μm). Die Bedingungen in den einzelnen Verfahrensschritten waren:

| Längsstreckung: | Temperatur: | 80 - 115 °C |
| | Längsstreckverhältnis: | 4,0 |
| Querstreckung: | Temperatur: | 80 - 135 °C |
| | Querstreckverhältnis: | 4,1 |
| Fixierung: | | 2 s bei 225 °C |

Die Dicke der trockenen Beschichtung betrug 80 nm.
Die Eigenschaften der so erhaltenen Folie sind in der Tabelle 2 widergegeben.

**Beispiel 2**

Im Vergleich zu Beispiel 1 wurde die Zusammensetzung der Deckschichten geändert.

**Deckschicht (A):**

| 90 Gew.-% | Polyethylentererphthalatrohstoff aus Ethylenglykol und Terephthalsäure mit einem SV Wert von 825 und einem DEG-Gehalt von 0,9 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat. |
| 10 Gew.-% | Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,5 Gew.% Siliziumdioxid-Partikel Sylobloc 46 mit einem d50 von 2,5 μm. Hergestellt mittels PTA Verfahren. Katalysator Kaliumtitanyloxalat mit 18 ppm Titan. Umesterungskatalysator Zinkacetat. |

**Deckschicht (C):**

| 97 Gew.-% | Polyesterrohstoff aus Ethylenglykol und Terephthal- und Isophthalsäure mit einem SV Wert von 825, einem Isophthalsäuregehalt von 22 Gew.-% und einem DEG-Gehalt von 0,9 Gew.% (Diethylenglykolgehalt als Monomer). Hergestellt mittels PTA Verfahren. Katalysator Kaliumtitanyloxalat mit 18 ppm Titan. Umesterungskatalysator Zinkacetat. |

(fortgesetzt)

| 3 Gew.-% | Polyethylentererphthalatrohstoff aus Ethylenglykol und Dimethylterephthalat mit einem SV Wert von 820 und DEG-Gehalt von 0,9 Gew.% (Diethylenglykolgehalt als Monomer) und 1,5 Gew.% Siliziumdioxid-Partikel Sylobloc 46 mit einem d50 von 2,5 μm. Hergestellt mittels PTA Verfahren. Katalysator Kaliumtitanyloxalat mit 18 ppm Titan. Umesterungskatalysator Zinkacetat. |
|---|---|

Als Beschichtung auf der Deckschicht (A) wurde die gleiche wie bei Beispiel 1 verwendet. Aufgrund der Zusammensetzung der Deckschicht (C) ist die Folie heißsiegelfähig. Sie weist bei einer Siegeltemperatur von 130 °C (0,5 s, 4 bar) eine Siegelnahtfestigkeit von 2,5 N/15 mm auf.

**Beispiel 3**

Im Vergleich zu Beispiel 1 wurde auch die zweite Deckschicht (A') beschichtet.

Beschichtung auf der Deckschicht (A): wie in Beispiel 1

Beschichtung auf der Deckschicht (A'):

Die wässrige Beschichtung bestand aus einem Colpolymeren aus 60 Gew.-% Methylmethacrylat, 35 Gew.-% Ethylacrylat und 5 Gew.-% N-Methylolacrylamid und einem Tensid. Der Feststoffgehalt betrug 5 Gew.-%. Die Dicke der trockenen Beschichtung betrug 30 nm.
Die Eigenschaften der so erhaltenen Folie sind in der Tabelle 2 widergegeben. Die Folie zeigte auf der (A')-Deckschicht eine gute Druckhaftung.

**Vergleichsbeispiel 1**

Im Vergleich zu Beispiel 1 wurde die Zusammensetzung der Beschichtung geändert. Die Beschichtung enthielt 10 Gew.-% eines Copolymeren aus Acrylsäure und Maleinsäure (3:1, Mw = 80000 g/mol).
Die Trockenschichtdicke lag wieder bei 80 nm.
Die Folie hat eine Sauerstoffdurchlässigkeit wie eine unbeschichtete Folie.

**Vergleichsbeispiel 2**

Zum Vergleich zu Beispiel 1 wurden die Eigenschaften der unbeschichteten Folie gemessen.

**Vergleichsbeispiel 3**

Die Folie aus Vergleichsbespiel 2 wurde mit der Beschichtung aus Beispiel 1 in einem separaten Schritt (offline) beschichtet. Die Trocknung erfolgte bei 130 °C. Die Beschichtungsdicke der getrockneten Folie war die gleiche wie bei Beispiel 1. Die Trockenschichtdicke lag bei 80 nm.
Die Folie hat eine höhere Sauerstoffdurchlässigkeit als die Folie aus Beispiel 1.

Tabelle 2:

| Folieneigenschaften | Beispiel 1 | Beispiel 2 | Beispiel 3 | VB 1 | VB 2 | VB 3 | Einheit |
|---|---|---|---|---|---|---|---|
| Dicke der Folie | 12 | 12 | 12 | 12 | 12 | 12 | °μm |
| Dicke der Beschichtung (A) | 80 | 80 | 80 | 80 | 0 | 80 | nm |
| Dicke der Beschichtung (A') | - | - | 30 | 0 | 0 | 0 | nm |
| Transparenz | 92,7 | 93,1 | 92,8 | 92,3 | 91,0 | 92,1 | % |
| Glanz (20°) Seite (A) | 137 | 135 | 138 | 141 | 185 | 139 | |
| Sauerstoffdurchlässigkeit der Folie (23 °C, 50 % rF) | 13 | 14 | 13 | 108 | 110 | 58 | $cm^3/m^2 \cdot d \cdot bar$ |

(fortgesetzt)

| Folieneigenschaften | Beispiel 1 | Beispiel 2 | Beispiel 3 | VB 1 | VB 2 | VB 3 | Einheit |
|---|---|---|---|---|---|---|---|
| Sauerstoffdurchlässigkeit im Vergleich zur unbeschichteten Folie | 11,8 | 12,7 | 11,8 | 98,2 | 100 | 53 | % |

**Patentansprüche**

1. Transparente, ein- oder mehrschichtige, biaxial orientierte Polyesterfolie, die auf mindestens einer Folienoberfläche eine Barriere-Beschichtung aufweist, **dadurch gekennzeichnet, dass**

   (a) die biaxial orientierte Polyesterfolie (exklusive Beschichtung) eine Dicke von 8 $\mu$m - 100 $\mu$m aufweist,
   (b) die Barriere-Beschichtung das Trocknungsproduck einer wässrigen Beschichtungsdispersion oder wässrigen Beschichtungslösung darstellt, die
   (c) mindestens ein Polyanion und mindestens ein Polyethylenimin enthält, wobei
   (d) das Polyanion neutralisierte Säuregruppen umfasst, die durch Carboxylat-, Phosphat- und/oder Sulfatgruppen dargestellt werden und
   (e) die Trockendicke der Beschichtung d im Bereich: 15 nm $\leq d <$ 200 nm liegt,
   wobei die biaxial orientierte, beschichtete Polyesterfolie
   (f) eine Transparenz von $\geq$ 88 % und
   (g) eine Sauerstoffpermeation aufweist, die mindestens um einen Faktor zwei niedriger ist, als die der unbeschichteten biaxial orientierten Folie.

2. Folie nach Anspruch 1, **dadurch gekennzeichnet, dass** sie Partikel enthält, bevorzugt in einer Konzentration von kleiner 0,5 Gew.-% bezogen auf das Gesamtgewicht der Folie und wobei besonders bevorzugt die Partikel in einer mehrschichtigen Folie in einer oder beiden Deckschichten enthalten sind.

3. Folie nach Anspruch 1 oder 2, **dadurch gekennzeichnet, dass** die Folie dreischichtig aus einer Basisschicht (B) und jeweils einer Deckschichten (A) und einer Deckschicht (C) aufgebaut ist, wobei auf der einen Seite der Basisschicht (B) die Deckschicht (A) und auf der anderen Seite der Basisschicht (B) die Deckschicht (C) aufgebracht ist.

4. Folie nach einem der Ansprüche 1 bis 3, **dadurch gekennzeichnet, dass** die Folie dreischichtig ist und eine ABC-Struktur aufweist, wobei die der Barriere-Beschichtung (auf der Deckschicht (A)) gegenüberliegende Deckschicht (C-Schicht) eine Siegelschicht ist.

5. Folie nach Anspruch 4, wobei die Siegelschicht amorph ist und zu mindestens 90 Gew.-% aus einem thermoplastischen Polyester besteht, wobei dieser einen Copolyester darstellt, der aus Ethylenglykol- sowie Terephthal- und Isophthalsäure-abgeleiteten Monomereinheiten aufgebaut ist, wobei der Anteil der aus Isophthalsäure-abgeleiteten Einheiten bevorzugt 10-30 Mol-% bzgl. der aus Dicarbonsäure-abgeleiteten Einheiten beträgt.

6. Folie nach einem der Ansprüche 1 bis 5, **dadurch gekennzeichnet, dass** das Polyanion vor der Neutralisation ein mittleres Molekulargewicht von mindestens 10000 g/mol besitzt.

7. Folie nach einem der Ansprüche 1 bis 6, **dadurch gekennzeichnet, dass** das Polyethylenimin hat ein mittleres Molekulargewicht von mindestens 25000 g/mol besitzt.

8. Folie nach einem der Ansprüche 1 bis 7, **dadurch gekennzeichnet, dass** die Beschichtungslösung eine wässrige Beschichtungslösung ist und 3-30 Gew.-% Feststoff enthält.

9. Folie nach einem der Ansprüche 1 bis 8, **dadurch gekennzeichnet, dass** das Gewichtsverhältnis des Polyanions (vor der Neutralisation) zum Polyethylenimin 90:10 bis 50:50, bevorzugt 80:20 bis 65:45 beträgt.

10. Folie nach einem der Ansprüche 1 bis 9, **dadurch gekennzeichnet, dass** die Beschichtungslösung zusätzlich zum Polyanion und dem Polyethylenimin, 5-20 Gew.-% (bezogen auf den Gesamtfeststoffgehalt der Beschichtungslösung) eines Vernetzers enthält.

11. Folie nach einem der Ansprüche 1 bis 10, **dadurch gekennzeichnet, dass** sie

- eine Transparenz von mehr als 90 %,
- einen Glanz bei 20° von mehr als 120 und
- eine Trübung von weniger als 5 %, besitzt.

12. Verfahren zur Herstellung einer Folie nach Anspruch 1, wobei die Rohstoffe in je einem Extruder pro Schicht aufgeschmolzen werden und durch eine Breitschlitzdüse auf eine gekühlte Abzugswalze extrudiert werden, die so erhaltene Vorfolie anschließend erneut erhitzt und sequentiell oder simultan in Längs- und Querrichtung bzw. in Quer- und Längsrichtung verstreckt ("orientiert") und anschließend thermofixiert, abgekühlt und aufgewickelt wird, **dadurch gekennzeichnet, dass** während des Folienherstellprozesses vor der Längs- und/oder Querstreckung eine In-Line Beschichtung mit einem Antragsgewicht (nass) zwischen 1,0 und 3,0 $g/m^2$ aufgebracht wird, wobei die Beschichtungslösung

- mindestens ein Polyanion und mindestens ein Polyethylenimin enthält, wobei
- das Polyanion neutralisierte Säuregruppen umfasst, die durch Carboxylat-, Phosphat- und/oder Sulfatgruppen dargestellt werden und wobei
- die Trockendicke d der Beschichtung nach der Thermofixierung im Bereich von 15 nm $\leq$ d < 200 nm liegt.

13. Verwendung einer Folie nach Anspruch 1 als Sauerstoff-Barrierefolie.

14. Verwendung nach Anspruch 13 für die Verpackung von Lebensmitteln.

15. Verwendung nach Anspruch 13 oder 14 in Monokomponentenverpackungen oder in Laminaten mit Polyolefinfolien.

**Europäisches Patentamt**
**European Patent Office**
**Office européen des brevets**

# EUROPÄISCHER RECHERCHENBERICHT

Nummer der Anmeldung

EP 19 19 1183

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP 6 271118 B2 (KOHJIN HOLDINGS CO LTD) 31. Januar 2018 (2018-01-31) * Ansprüche 1-11 * * Absätze [0002], [0013], [0021], [0025], [0026] * ----- | 1-15 | INV. B32B27/08 B32B27/20 B32B27/36 B32B37/00 |
| X | JP 5 937319 B2 (KOHJIN HOLDINGS CO LTD) 22. Juni 2016 (2016-06-22) * Ansprüche 1-7 * * Absätze [0001], [0002], [0011], [0018], [0020], [0021], [0028], [0029] * * Tabelle 1 * ----- | 1-15 | |
| Y | EP 1 457 317 A1 (MITSUBISHI POLYESTER FILM GMBH [DE]) 15. September 2004 (2004-09-15) * Abbildung 2 * * Ansprüche 1, 6-9, 11-19 * * Absätze [0001], [0006], [0008], [0011], [0012], [0033], [0038], [0040] * * Absatz [0044] - Absatz [0048] * * Absätze [0053], [0056], [0057] * * Absatz [0073] - Absatz [0078]; Beispiele 1-2; Tabelle 2 * ----- | 1-15 | |
| Y,D | WO 2013/182444 A1 (BASF SE [DE]; BASF SCHWEIZ AG [CH]) 12. Dezember 2013 (2013-12-12) * Ansprüche 1-17 * * Seite 1, Zeile 6 - Zeile 16 * * Seite 7, Zeile 22 - Seite 8, Zeile 11 * ----- | 1-15 | RECHERCHIERTE SACHGEBIETE (IPC) B32B |
| A | EP 1 457 318 A1 (MITSUBISHI POLYESTER FILM GMBH [DE]) 15. September 2004 (2004-09-15) * Abbildungen 1-2 * * Ansprüche 1-18 * ----- | 1-15 | |

Der vorliegende Recherchenbericht wurde für alle Patentansprüche erstellt

| Recherchenort | Abschlußdatum der Recherche | Prüfer |
|---|---|---|
| Den Haag | 8. Januar 2020 | Yu, Qianqian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 3 613 592 A1

## ANHANG ZUM EUROPÄISCHEN RECHERCHENBERICHT
## ÜBER DIE EUROPÄISCHE PATENTANMELDUNG NR.

EP 19 19 1183

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-01-2020

| Im Recherchenbericht angeführtes Patentdokument | Datum der Veröffentlichung | Mitglied(er) der Patentfamilie | Datum der Veröffentlichung |
|---|---|---|---|
| JP 6271118 B2 | 31-01-2018 | JP 6271118 B2<br>JP 2013256573 A | 31-01-2018<br>26-12-2013 |
| JP 5937319 B2 | 22-06-2016 | JP 5937319 B2<br>JP 2013059930 A | 22-06-2016<br>04-04-2013 |
| EP 1457317 A1 | 15-09-2004 | DE 10302035 A1<br>EP 1457317 A1<br>JP 2004224050 A<br>KR 20040067937 A<br>US 2004146750 A1 | 29-07-2004<br>15-09-2004<br>12-08-2004<br>30-07-2004<br>29-07-2004 |
| WO 2013182444 A1 | 12-12-2013 | CN 104350091 A<br>EP 2859035 A1<br>ES 2594776 T3<br>JP 6312151 B2<br>JP 2015526534 A<br>US 2015086734 A1<br>WO 2013182444 A1 | 11-02-2015<br>15-04-2015<br>22-12-2016<br>18-04-2018<br>10-09-2015<br>26-03-2015<br>12-12-2013 |
| EP 1457318 A1 | 15-09-2004 | DE 10302036 A1<br>EP 1457318 A1<br>JP 2004224051 A<br>KR 20040067972 A<br>US 2004146727 A1 | 29-07-2004<br>15-09-2004<br>12-08-2004<br>30-07-2004<br>29-07-2004 |

Für nähere Einzelheiten zu diesem Anhang : siehe Amtsblatt des Europäischen Patentamts, Nr.12/82

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013182444 A
- WO 9413476 A

- EP 1647568 B1
- EP 1777251 B1

**In der Beschreibung aufgeführte Nicht-Patentliteratur**

- Handbook of Thermoplastic Polyesters. Wiley-VCH, 2002

- Polyesters, Films. Encyclopedia of Polymer Science and Engineering. John Wiley & Sons, 1988, vol. 12